# EUROPEAN PATENT APPLICATION

(11) **EP 1 022 189 A1**
(43) Date of publication of application: **26.07.2000**
(21) Application number: 98920544.8
(22) Date of filing: 21.05.1998
(51) Int. Cl.: B60Q 1/52, B60Q 1/14

(54) **DEVICE FOR AUTOMATICALLY SWITCHING ON AND OFF THE LIGHTS OF A VEHICLE AND WARNING LIGHTS FOR ROAD TRAFFIC**

(30) Priority: 21.05.1997 ES 9701411 U
(71) Applicant: Bruna Brotons, Javier, 08037 Barcelona (ES)
(72) Inventor: Bruna Brotons, Javier, 08037 Barcelona (ES)
(74) Representative: Manresa Medina, Enrique
(86) International application number: ES9800142
(87) International publication number: WO9852790

(57) **Abstract**

Device for switching on and off automatically the lights of a vehicle and for warning devices related to road traffic, comprising at least a wave receiver (10) mounted on-board the vehicle and on the traffic lane of the vehicle in predetermined areas, coded with emitters (3, 4) mounted on posts (1, 2) or beacons which interact with said receiver (10) generating signals which activate the switching on of the vehicle lights through at least one auxiliary switch (5) or generate warning signals through a control unit and a display screen (12) mounted on-board the vehicle.

## Description

### Field of the invention

The present invention refers to a device for automatically switching on and off the light device of a vehicle, and for messages referring to traffic circumstances (proximity of stop signs, speed limit area, etc.). The invention is applicable particularly in the case of transition through a tunnel (or crossing areas with low lighting), and aims at avoiding the drivers to forget the switching on of the dipped headlights when entering the tunnel, or doing it late and especially to prevent them from not switching them off after leaving the tunnel.

The device is also capable to realize an automatic connection of the light device of vehicles, in order to facilitate their visualization at a distance, facing adverse illumination conditions, in order to make it possible to distinguish the aforesaid vehicles from a remote point, for example in front of repetitive conditions in foreseeable (effects of view against the light caused by illumination, close to the horizontal, directed against a driver at dusk, specific orographical areas, etc.), accidental, detectable (snow, cloud of smoke from fires, thunderstorms, etc.) periods.

The field of application is for all the vehicles that circulate on roads or similar ways of communication.

### Background of the invention

Several devices are known in the present prior art for the automatic control of the lights, especially for the front lights of a vehicle, provided to cause an activation or switching off of their light device at dusk or on a foggy day in which visibility is noticeably diminished on the roads.

Such devices are composed by an automatic activation/switching off device consisting of a photo sensitive detector, provided on an outer part of the vehicle, in general in the front, to check the distribution and intensity of light in the front zone of the vehicle and which, through a command unit, controls the switching on or off of the lights of the vehicle in function of the external illumination conditions.

Devices of this type are describe in the patents ES- A 408.005 where the photo sensitive element is integrated in the windscreen of the vehicle and ES-A 552.680 which proposes to obtain an efficient diminishment of the lighting of the vehicles in areas where various vehicles are in front, in order to avoid dazzle. The European patent EP-A-693397 on the other hand, refers to a device for the automatic activation of the lights of a vehicle, with a lighting sensor installed in the front of one of its external mirrors.

Such devices are as a rule only slightly capable of lighting a vehicle when entering a tunnel, sufficiently in time in order to, in the phase of access into that tunnel, adequately compensate the sudden transition derived from the change from a maximum illumination situation to one of obscurity or artificial illumination, inside the tunnel (whose illumination even could prevent the automatic switching on, as it misleads the photo electric sensor) and apart from the difficulties that are inherent to the detection of the actual average luminosity in the environment of the vehicle, they result totally inefficient to control the light device of the vehicle in circumstances of environmental illumination which make the vision of some determine vehicles difficult, by the others, in the cases in which the illumination would be high (horizontal light at dusk) or to respond in time to climate or environmental perturbations (fog, smoke, etc.).

Thus the need is obvious for a device that is capable to realize an automatic connection and switching off of the lights of a vehicle, at a determine distance from the entrance to a tunnel and at its exit, or in several adverse environmental and traffic circumstances tending to facilitate its identification by other vehicles.

### Brief description of the invention

The device of this patent application seeks precisely to resolve such necessity, consisting of an aggregate prepared for its integration in the vehicles, in factory or possible to be installed by the user under the form of a unit or ""kit"" that essentially is integrated by a wave receiver, for example through the radio, associated with a command circuit through which the opening and closing of an auxiliary switch will be produced, intercalated in parallel with the manual functioning switch, arranged to feed or close the external lights of a vehicle. The above mentioned control circuit will in general consist of an amplifier and a command circuit which operate an electromagnetic or possibly electronic relay arranged to activate the mentioned auxiliary switch, either to open or to close.

In the case of tunnels, the installation has been provided, in the neighborhood of the beginning and the end of the tunnel (for example fixed on the very poles carrying the traffic signs or on markers), of various transmitters of coded and set radio frequency signals, generally direct waves led through a medium of wave guide in a specific form to make each of the mentioned sensors interact only on a very definite and differentiated zone of the traffic lane with the mentioned receiver of hertz waves installed on the vehicle, when the latter enters in this area. In a preferred solution, and in tunnels with double driving direction, the mentioned transmitters are spaced out all along the itinerary in order not to interfere each other and the one destined to switch off is further away from the entrances to the tunnel. Alternatively and in order to guarantee the specific functioning of each of the mentioned transmitters, one can also foresee the use of some barriers (photo electric or similar, advantageously vertical) in a point nearby the lanes of the exit of the tunnel which enable with some delay the correspondent transmitter to switch off the lights.

The mentioned transmitters, in order to interact with the receiver that is installed in the car, can alternatively be integrated in an autonomous and portable aggregate, capable to constitute an inspection tool, for example on behalf of the traffic agents, to check the correct functioning of the illumination device of a vehicle from a distance, without having to stop the latter. It. would also be possible for a patrol car to automatically switch on the lights of the vehicles circulating on a certain road, when ahead of the check-point a certain climate (snow, rain or thunder) or environmental (a fire) circumstance is known which recommends to activate the use of illumination of the vehicles.

With the help of a structure as explained above, it is also possible through the use of poles or coded signal emitting markers placed on the verges of the road at certain spots, and a receiver circuit sited on-board of each vehicle, it would be possible to transmit some warnings which conveniently decoded by an electronic device based on a microprocessor could show on a screen, conveniently installed on the dashboard of the car, different warnings related to the particularities of the traffic, for example the proximity of a stop signal or barrier, an area of radio-controlled speed, etc.

The characteristics advantages of the object of this invention will appear more clearly in the explanation which follows, of an example graphically realized on a sheet of drawings, which is presented solely as an illustrative but not restrictive example.

### Brief description of the drawings

In the aforesaid drawings:
Figure 1 is an illustrative perspective view of the application of the automatic control device for the connection and switching off the lights of a vehicle when the latter is crossing a tunnel.
Figure 2 is a scheme of a possible embodiment of a command circuit applied to the automatic connection and switching off of the lights of a vehicle in accordance with the mentioned principles.

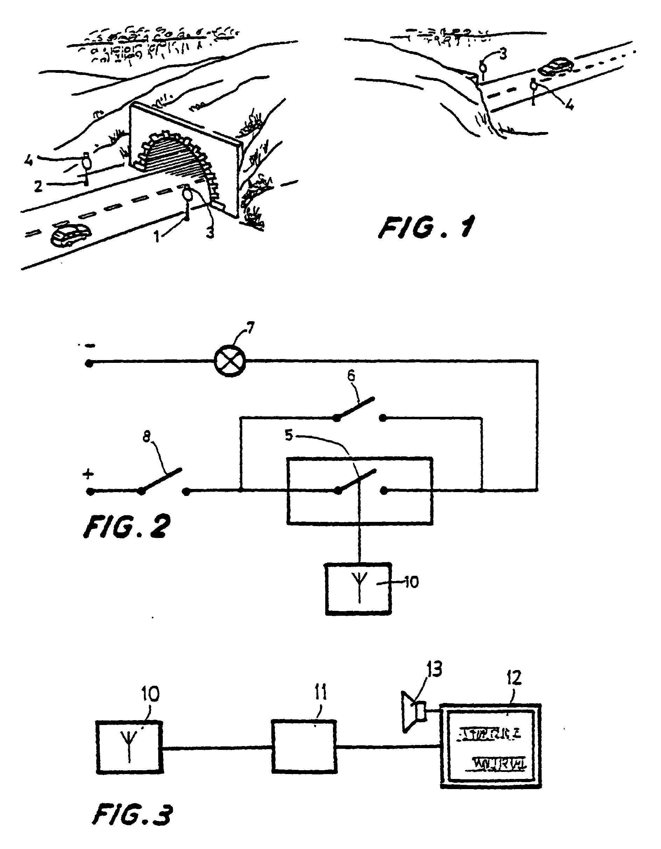

Besides, figure 3 is an illustration of an example of realization corresponding to a reception circuit installed in a vehicle prepared for the indication of a series of warnings transmitted from some emitting markers installed near the verge, relative to different circumstances of traffic.

In the first of the aforesaid figures one can see, together with the lateral of the circulation lane and ahead of the entrance and exit mouths of a tunnel, and installed on some poles 1, 2 or markers (which can be the very bearers of the conventional road signs), some transmitters 3, 4 of radio frequency signals of specific frequencies f₁ and f₂, optionally coded, applied respectively to the ignition and switching off through a receiver 10, installed in the vehicles, of a command circuit applied to connect or disconnect automatically the lights of the vehicle. The mentioned transmitters 3, 4 cover specific, differentiated fields of the road, and in order not to cause any interference they are conveniently remote from each other, in general transmitter 4 for the switching off of the lights, further away from the mouth of the tunnel, having the possibility to integrate means of wave guiding in order to improve its directionality and efficiency. Alternatively, the transmitters 4 for the switching off of the lights of the vehicle can be connected to some detectors of the passing of the vehicles along a spot close to the exit of the tunnel which initiate or validate, with some delay, the signal of the mentioned transmitters 4.

Referring to Figure 2, one can distinguish that the mentioned command circuit has a wave receiver 10 through radio (arranged, for example, to work in the approved 433,92 MHz band recognized for the use of automatisms), provided with the corresponding aerial, associated with an amplifying and control circuit system, for example integrating a relay (not shown in detail, its characteristics being sufficiently known) that controls an auxiliary switch 5 connected in parallel with the conventional manual switch 6 for the connection of the lights 7 of the vehicle. In any case and as is shown on this Figure the circuit will only be active while the vehicle will have the key contact on (switch 8 locked) and will not have any memory, so that after disconnecting the key contact of the vehicle, the position of the auxiliary switch 5 will be open. The transmission code will be sufficiently complex so as not to be possibly interpreted by door automatisms and other receivers which work on this frequency band.

As one can see, given its simplicity, the device can be materialized in a unit prepared to be installed in the vehicles in factory or as a complement making it possible through same transmitters installed in determined points of the traffic lanes to cause the automatic switch-on of the lights of a vehicle.

According to what has been shown here above the device allows also to check the correct functioning of the lights of a vehicle, from a distance. For example, in the case of motorcycles where the dipped head lighting is compulsory, the traffic agents would be able to check whether a certain vehicle with the lights off is out of order or not, without having to stop it.

The proposed device will have a reset system, whereby to be able to switch off the lights in a hand driven turn-off mode in the case that the marker that transmits the switching off code would fail or would have been destroyed.

Though until now we have describes the use of transmitters of radio frequency signals, it would be possible to use other signal sources such as a source of acoustic or luminous waves, and a corresponding receiver in the vehicles, prepared to be activated in response to the mentioned signals, still keeping the main characteristics of the device and its operation.

In the case that what is desired would be that the automatic transmission towards the vehicle of warning signals in relation with the traffic, the vehicle would integrate an additional circuit in which through the use of the very receiver 10, the received signal would be transmitted to a unit 11 of decoding and interpretation connected with a screen 12 to be installed on the dashboard of the vehicle, on which information will be shown relative to the neighborhood of a traffic sign or any other signal which would allow an adequate reaction or anticipation on behalf of the user. The activation of the mentioned warning could be accompanied by an acoustic signal, reproduces by a loudspeaker 13.

The present invention being sufficiently describes so as to be turned into practice by one skilled in the art, it is considered to be made extensive to all those variations of details which do not alter its object, in particular the type of transmitters used, the use of other detectors and auxiliary support circuits, etc. The essentiality of this patent application of the invention is resumed in the following claims.

## Claims

1. A device for automatically switching on and off the lights of a vehicle, in particular when it has to travel through a tunnel, an area of low lighting, for the identification of the vehicle from a distance in determined periods of the day, predetermined areas and climate and environmental circumstances adverse for visibility, of the type which comprises at least an auxiliary switch 5, inserted in parallel with the switch (6) of manual activation arranged to feed or disconnect the lights (7) of the vehicle, whose auxiliary switch (5) is commanded by an automatic connection and disconnection circuit, characterized in that the mentioned automatic connection and disconnection circuit is driven by a wave receiver (10) and in that in the circulation lane of the vehicle, in some pre established zones, some differentiated wave transmitters (3, 4) have been provided, which inter act with the above said receiver (10) generating some different signals for the opening and closing of the mentioned auxiliary switch (5), at a determined distance from the entrance of said tunnel or predetermined area.

2. A device, according to the former claim, characterized in that the mentioned wave receiver (10) is a radio wave receiver, and the transmitters (3, 4) consist of some direct and coded Hertz wave transmitters, with their own frequency and coded f₁ and f₂.

3. A device, according to claim 2, characterized in that the mentioned transmitters (3, 4) of radio waves form such a media as a waveguide to cover a certain area, differentiated, of the road the vehicle has to pass on.

4. A device, according to claim 2, characterized in that in the case of application in a tunnel, with double traffic direction, the transmitters (4) destined to switch off the lights of the vehicle, are installed on some poles, on the side of the road, sensitively further away from the mouth of the tunnel than the transmitters for the switching on of the lights.

5. A device according to claim 4, characterized in that in the proximity of the exit of the mentioned tunnel some detecting means have been provided, connected with the mentioned transmitter (4).

6. A device, according to claim 1, characterized in that the mentioned transmitters (3,4) to inter act with the receiver (10) installed in the automobile, are integrated in an autonomous and portable unit, capable of constituting an instrument of inspection in order to check from a distance, the correct working of the lights of a vehicle.

7. A device, according to claim 1 characterized in that the mentioned device of automatic connecting-disconnecting is comprised of a module capable of being intercalated in the lighting installation of the automobile.

8. A device, according to claim 1, characterized in that the transmitters (3,4) are transmitters of acoustic waves with frequencies f1 and f2 differentiated, focused on differentiated traffic areas of vehicles.

9. A device, according to claim 1, characterized in that the transmitters (3,4) are transmitters of light waves, oriented over differentiated traffic areas of vehicles.

10. A device for the supply of warnings related to traffic, of the type that integrates an associated circuit to the vehicle, capable of automatic activation because along the itinerary of the vehicle, in pre-fixed areas, some transmitters of coded waves have been installed on markers that inter act with the mentioned receiver (10), thus generating information signals about the neighbourhood of a determined traffic signs or a permanent or transitory traffic circumstance which requires a speed reduction or a special behaviour of the vehicle and because this wave receiver (10) is associated with an electronic unit (11) based on a microprocessor for decoding of the signal, and whose unit (11) is connected to a screen (12) installed preferably on the dashboard of the vehicle, in order to inform about the traffic circumstance of the mentioned transmitted signal.

11. A device, according to claim 10, characterized in that the association has been foreseen of an acoustic reproducer (13) together with the screen (12) to indicate the moment of presentation of a warning information on this screen.
